# EUROPÄISCHE PATENTANMELDUNG

(11) **EP 4 026 795 A1**
(43) Veröffentlichungstag der Anmeldung: **13.07.2022**
(21) Anmeldenummer: 22150300.6
(22) Anmeldetag: 05.01.2022
(51) Int. Cl.: B67D 1/00, B67D 1/08, G06Q 10/00

(54) **VENTILEINSATZ EINES GETRÄNKEFASSES SOWIE MONITORINGSYSTEM UND VERFAHREN ZUR ÜBERWACHUNG VON GETRÄNKEFÄSSERN**

(30) Priorität: 12.01.2021 DE 102021100372
(71) Anmelder: Winkelmann, Erik, 01099 Dresden (DE); Rietschel, Simon, 01099 Dresden (DE); Winkelmann, André, 01097 Dresden (DE); Rudolf, Christian, 01099 Dresden (DE); Bauerfeind, Georg, 01097 Dresden (DE)
(72) Erfinder: Winkelmann, Erik, 01099 Dresden (DE); Rietschel, Simon, 01099 Dresden (DE); Winkelmann, André, 01097 Dresden (DE); Rudolf, Christian, 01099 Dresden (DE); Bauerfeind, Georg, 01097 Dresden (DE)
(74) Vertreter: Hecker, Roland Christoph

(57) **Zusammenfassung**

Die Erfindung betrifft einen Ventileinsatz (1) eines Getränkefasses für kohlensäurehaltige Getränke.

Der Ventileinsatz (1) weist mindestens eine Messeinheit (5) auf, die Messtechnik, Elektronik und Sensorik zur Erfassung von Druck, Temperatur, Lage und Beschleunigung und zur Ortsbestimmung sowie Mittel zur Identifikation des Ventileinsatzes (1), Mittel zum Senden und Empfangen von Daten, die mit der Sensorik zur Erfassung von Druck, Temperatur, Lage und Beschleunigung und zur Ortsbestimmung kommunikativ verbunden sind, sowie Mittel zur Stromversorgung umfasst, wobei die mindestens eine Messeinheit (5) in einem Bereich, der zwischen dem einen Verbindungsbereich (4) für die Befestigung des Ventileinsatzes (1) in dem einen Getränkefass und einem freien Ende (3a) des Steigrohrs (3) liegt, platziert und zumindest teilweise am Umfang des Steigrohrs befestigt ist und in mindestens einer Hülle oder mindestens einem Gehäuse aus lebensmittelechtem Material wasserdicht eingehaust ist.

Des Weiteren betrifft die Erfindung ein Getränkefass zur Lagerung eines kohlensäurehaltigen Getränks, wobei das Getränkefass den genannten Ventileinsatz (1) als wartungsfähiges Verschleißteil aufweist, sowie ein Monitoringsystem und Verfahren zur Überwachung von derartigen Getränkefässern.

## Beschreibung

Die Erfindung betrifft einen Ventileinsatz eines Getränkefasses für kohlensäurehaltige Getränke. Des Weiteren betrifft die Erfindung ein Getränkefass zur Lagerung eines kohlensäurehaltigen Getränks, wobei das Getränkefass den erfindungsgemäßen Ventileinsatz als Verschleißteil aufweist, sowie ein Monitoringsystem und Verfahren zur Überwachung von derartigen Getränkefässern. Das Monitoringsystem und das Verfahren dienen neben der Qualitätsüberwachung auch der prädiktiven Wartung sowie der Optimierung der Warenströme von Getränkefässern.

Aus dem Stand der Technik sind Monitoringsysteme bekannt, bei denen Druck und/oder Temperatur von Getränkefässern gemessen werden und gegebenenfalls auch der Ort der Getränkefässer erfasst wird. So sind Vorrichtungen und Verfahren, bei denen der Druck und die Temperatur von Bierfässern überwacht werden und die darüber hinaus auch ein entsprechendes Monitoringsystem auf der Basis der Druck- und Temperaturmessung umfassen beziehungsweise anwenden, aus den Druckschriften WO 2020/028622 A1**,** US 2012 00 59 513 A1**,** DE 601 32 881 T2 und der CN 101901536 A bekannt. Des Weiteren sind Überwachungssysteme für Fässer bekannt, bei denen neben einer Temperaturmessung auch eine Ortsbestimmung der Fässer erfolgt, zum Beispiel aus der US 2019 03 52 166 A1 und der WO 2017/201544 A1**.**

Die Getränkefässer sind in der Regel mit einem Ventileinsatz, dem sogenannten Fitting, ausgerüstet, der Strömungswege für fluide Medien in und aus dem Getränkefass bereitstellt, welche jeweils mittels mindestens eines Ventils öffen- und schließbar sind. Der Ventileinsatz befindet sich in der Regel an der Fass-Oberseite, wobei am Ventileinsatz ein Zapfkopf angebracht werden kann. Der Ventileinsatz umfasst neben dem mindestens einem Ventil ein Steigrohr, das vom Bereich der Fassoberseite in das Innere des Getränkefasses führt. Der Ventileinsatz, genauer gesagt dessen Dichtung, stellt ein Verschleißteil dar. Zu ermittelnde Wartungsintervalle sind somit in erster Linie relevant für den Ventileinsatz (Fitting) und nicht für das Getränkefass.

Die oben genannten, aus dem Stand der Technik bekannten Systeme zielen in erster Linie auf die Überwachung der Qualität der Flüssigkeit ab. Die Sensorik für die Temperatur- beziehungsweise Druckmessung sowie die Ortsbestimmung sind bei den Systemen, die im Stand der Technik beschrieben sind, hauptsächlich außen am Getränkefass angebracht und somit an das Fass gebunden. Dadurch können zwar Informationen über eine notwendige Revision des Getränkefasses gewonnen werden, nicht jedoch über die Anzahl der Befüllungen und Entleerungen des Ventileinsatzes. Da der Ventileinsatz und das Getränkefass jedoch nicht zwangsläufig dauerhaft aneinandergebunden sind, lassen die aus dem Stand der Technik bekannten Systeme keine zuverlässigen Aussagen über die Anzahl der Befüllungen und Entleerungen eines Ventileinsatzes zu. Eine Entkopplung, das heißt eine unabhängige Erfassung von Informationen über die Befüllung und Entleerung des Ventileinsatzes einerseits und des eigentlichen Behälters, in der Regel eines Getränkefasses, andererseits, ist bei den Vorrichtungen aus dem Stand der Technik nicht möglich.

Zusammenfassend muss festgestellt werden, dass es im Stand der Technik keine Lösung gibt, welche die Beanspruchung des Verschleißteils durch die Anzahl der Befüll- und Entleerungsvorgänge des Ventileinsatzes und den Zustand des Verschleißteils, also einen unerwarteten Druckverlust des Ventileinsatzes, direkt erfasst. Die derzeit bekannten Lösungen setzen auf eine dauerhafte Verbindung von Fass und Ventileinsatz, welche praktisch nicht gewährleistet werden kann. Der aktuelle Stand der Technik nutzt weiterhin keine Datenanalysen, um Vorhersagen über mögliche Ausfälle von Verschleißteilen, Absatzmengen und somit auch Herstellungsprognosen zu errechnen, sondern setzt auf reaktive Maßnahmen.

Eine der Erfindung zugrundeliegende Aufgabe besteht in der Bereitstellung einer Möglichkeit, den Zustand der Flüssigkeit innerhalb des Getränkebehälters und den Zustand des Ventileinsatzes zu überwachen, um daraus Informationen über notwendige Wartungszyklen ermitteln zu können. Insbesondere soll der Nutzer Informationen darüber erhalten, wann ein Ventileinsatz, insbesondere seine Dichtung, revisioniert oder ausgetauscht werden soll beziehungsweise ausgetauscht werden muss.

Der Nutzer soll die aufgezeichneten Daten nutzen können, um zum Beispiel zu ermitteln, wie viele Befüllungs- und Entleerungszyklen ein Ventileinsatz seit seiner Inbetriebnahme oder letzten Revision durchlaufen hat, um so in Abhängigkeit der Zyklen festlegen zu können, wann der Ventileinsatz revisioniert werden muss. Darüber hinaus soll der Nutzer historische Daten von sich und anderen Nutzern nutzen können, um durch Datenanalysen eine zustandsorientierte Instandhaltung abzuleiten und so den Verschleißvorrat des Ventileinsatzes optimal ausnutzen.

Die Aufgabe der Erfindung wird gelöst durch die Gegenstände der unabhängigen Ansprüche. Weiterbildungen sind in den abhängigen Ansprüchen angegeben.

Ein Aspekt der Erfindung betrifft einen Ventileinsatz eines Getränkefasses für kohlensäurehaltige Getränke, wobei der Ventileinsatz derart ausgebildet ist, dass er mindestens einen durch den Ventileinsatz hindurch verlaufenden Strömungsweg für fluide Medien bereitstellt, der mittels eines Ventils öffen- und schließbar ist, und der Ventileinsatz Folgendes umfasst:
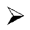 mindestens eine Hülse,
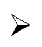 mindestens ein Steigrohr mit einem ersten, in der Hülse befestigten Ende und einem zweiten, freien Ende als Teil des Strömungsweges für fluide Medien,
> mindestens ein Ventil, mittels dessen der Strömungsweg, der durch das Steigrohr führt, öffen- und schließbar ist,
> einen Verbindungsbereich für die Befestigung des Ventileinsatzes in dem einen Getränkefass,
> mindestens ein Abdichtungselement für die Abdichtung des einen Getränkefasses am Verbindungsbereich nach außen,
> mindestens eine Messeinheit, die Messtechnik, Elektronik und Sensorik zur Erfassung von Druck, Temperatur, Lage und Beschleunigung, in der Regel dreiachsiger Beschleunigung, und zur Ortsbestimmung sowie Mittel zur Identifikation des Ventileinsatzes, Mittel zum Senden und Empfangen von Daten, die mit der Sensorik zur Erfassung von Druck, Temperatur, Lage und Beschleunigung und zur Ortsbestimmung kommunikativ verbunden sind, sowie mindestens ein Element zur Stromversorgung umfasst, wobei die mindestens eine Messeinheit in einem Bereich, der zwischen dem einen Verbindungsbereich für die Befestigung des Ventileinsatzes in dem einen Getränkefass und dem freien Ende des Steigrohrs liegt, platziert und zumindest teilweise am Umfang des Steigrohrs befestigt ist und in mindestens einer Hülle oder mindestens einem Gehäuse aus lebensmittelechtem Material wasserdicht eingehaust ist.

In der Messeinheit ist vorzugsweise eine elektronische Datenverarbeitungseinheit, das heißt ein Computer, enthalten.

Mit dem Begriff "lebensmittelecht" werden Materialien bezeichnet, die in Verbindung mit Lebensmitteln unschädlich sind beziehungsweise keine geruchliche oder geschmackliche Wirkung auf Lebensmittel, im vorliegenden Fall auf Bier oder andere kohlensäurehaltige Getränke, haben. Bevorzugte Materialien sind dabei Kupfer, Messing und Edelstahl. Dabei kann/können die aus mindestens einem lebensmittelechten Material bestehenden Einhausungen der Messeinheit/Messeinheiten ein Gehäuse umfassen, das mit einer wasserdichten Abdichtung versehen ist.

Als Mittel zur Stromversorgung sollten vorzugsweise keine Mittel zur kabelgebundenen Stromversorgung notwendig sein. Die Elemente der Stromversorgung können dabei eine oder mehrere Batterien umfassen. Alternativ oder zusätzlich können die Elemente der Stromversorgung aber auch ein oder mehrere Elemente zur batterielosen und nicht kabelgebundenen Stromversorgung umfassen, zum Beispiel mindestens ein Induktionselement und/oder mindestens ein Energy-Harvesting-Element, das/die jeweils vorzugsweise in der Messeinheit untergebracht ist/sind. Gemäß einer vorteilhaften Ausführungsform der Erfindung ist als Element der Stromversorgung mindestens ein Energy-Harvesting-Element ausgebildet, die Fluidströmung, den Fassdruck oder das Bewegen einer Feder im Ventileinsatz zur Energieversorgung zu nutzen. Das mindestens eine Engery-Harvesting-Element ist vorzugsweise ausgebildet, Radiowellen aufzufangen und energetisch zur Stromversorgung zu verwenden. Gemäß einer besonders vorteilhaften Ausgestaltung des Ventileinsatzes umfassen die Mittel zur Stromversorgung weder Mittel zur kabelgebundenen Stromversorgung noch Batterien.

Vorzugsweise sind die Mittel zur Identifikation ausgebildet, akustische und optische Signale zu nutzen. Die Sensorik zur Erfassung der Lage und Beschleunigung umfasst gemäß einer bevorzugten Ausführungsform der Erfindung mindestens einen Beschleunigungs- und/oder Lagesensor, vorzugsweise einen dreiachsigen Beschleunigungssensor, zum Beispiel einen Gyroskopsensor. Ein solcher Beschleunigungs- und/oder Lagesensor ist in der Lage, auf kleinste Beschleunigungen, Drehbewegungen und Lageänderungen zu reagieren.

In einer vorteilhaften Ausgestaltung des Ventileinsatzes umfassen die Mittel zum Senden und Empfangen von Daten der Kommunikationseinrichtung zumindest einen Transceiver, in dem mindestens ein Sender und mindestens ein Empfänger kombiniert ausgebildet sind.

Ein weiterer Aspekt der Erfindung betrifft ein Getränkefass für die Lagerung von kohlensäurehaltigen Getränken. Dieses Getränkefass umfasst einen Fasskörper mit einer Mantelfläche und einer ersten Stirnseite und einer gegenüberliegenden zweiten Stirnseite. In den Fasskörper des Getränkefasses ist der oben beschriebene Ventileinsatz als austauschbares, vorzugsweise wartungsfähiges Verschleißteil eingesetzt und dabei mit seinem Verbindungsbereich an dem Fasskörper an einer der Stirnseiten oder der Mantelfläche befestigt, wobei das freie Ende des Steigrohrs in das Innere des Fasskörpers weist. Der Ventileinsatz ist derart eingesetzt, dass der mindestens eine durch den Ventileinsatz hindurch verlaufenden Strömungsweg für fluide Medien mindestens einen Strömungsweg für fluide Medien in und aus dem Getränkefass bereitstellt, welcher mittels des mindestens einen Ventils öffenund schließbar ist. Dabei ist das Getränkefass am Verbindungsbereich mittels der Abdichtungselemente nach außen abgedichtet. Die am Ventileinsatz angebrachte/angebrachten Messeinheit/Messeinheiten mit der Messtechnik, Elektronik und Sensorik zur Erfassung von Druck, Temperatur, Lage und Beschleunigung und zur Ortsbestimmung, den Mitteln zur Identifikation des Ventileinsatzes sowie der Kommunikationseinrichtung mit den Mitteln zum Senden und Empfangen von Daten mit den Mitteln zur Stromversorgung befindet/befinden sich innerhalb des Fasskörpers, ist/sind aber in der mindestens einen Hülle oder dem mindestens einen Gehäuse aus lebensmittelechtem Material wasserdicht eingehaust. An der Hülse des Ventileinsatzes ist üblicherweise ein Zapfkopf anbringbar.

Die Messtechnik, Elektronik und Sensorik zur Erfassung von Druck, Temperatur, Lage und Beschleunigung, in der Regel dreiachsiger Beschleunigung, und zur Ortsbestimmung sowie die Mittel zum Senden und Empfangen von Daten können alle oder teilweise in einer Messeinheit enthalten sein, die zumindest teilweise, vorzugsweise mit ihrem Gehäuse vollständig am Umfang des Steigrohrs befestigt ist. Das Steigrohr kann alternativ oder zusätzlich auf der Außenseite beziehungsweise seinem Umfang mit den Mitteln zur Identifikation des Ventileinsatzes, zum Beispiel einer Identifikationsnummer DEV-ID (Device Identification Number) und einem RFID-Chip ausgestattet werden. Alle Meldungen enthalten immer die zugehörige DEV-ID. Somit ist eine manuelle Suche vor Ort beziehungsweise eine automatische Identifikation über RFID möglich. Die Abkürzung RFID (= radio-frequency identification) bezeichnet ein allgemein bekanntes System der Identifizierung mit Hilfe elektromagnetischer Wellen, welches aus einem Transponder, der sich an einem Gegenstand befindet und einen kennzeichnenden Code enthält, sowie einem Lesegerät zum Auslesen dieser Kennung besteht.

Ein weiterer Aspekt der Erfindung betrifft ein Monitoringsystem für die Überwachung von Getränkefässern mit den oben beschriebenen Merkmalen, umfassend
> eine Vielzahl an Getränkefässern mit den Ventileinsätzen mit den angebrachten Messeinheiten mit der Messtechnik, Elektronik und Sensorik zur Erfassung von Druck, Temperatur, Lage und Beschleunigung und zur Ortsbestimmung, sowie den an den Ventileinsätzen angebrachten Mitteln zur Identifikation des Ventileinsatzes sowie an den Ventileinsätzen angebrachten Kommunikationseinrichtungen mit den Mitteln zum Senden und Empfangen von Daten, die jeweils mit der Sensorik zur Erfassung von Druck, Temperatur, Lage und Beschleunigung und zur Ortsbestimmung kommunikativ verbunden sind,
> mindestens eine Empfangsstation mit mindestens einem Empfänger für die über eine drahtlose Kommunikationsverbindung gesendeten Temperaturwerte, Druckwerte und Lage- und Beschleunigungswerte, Ortsanzeigen sowie für die Identifikationsdaten,
> mindestens eine Sendestation mit mindestens einer Sendeeinheit für eine drahtlose Übertragung von Daten an die Kommunikationseinrichtungen der Messeinheiten der Ventileinsätze,
> mindestens eine Recheneinrichtung zur Speicherung und gegebenenfalls zur Auswertung der Daten, die mit dem mindestens einen Empfänger der Empfangsstation kommunikativ verbunden ist, und
> mindestens eine Steuerungseinrichtung für die Steuerung der Überwachungszyklen, die mit der mindestens einen Recheneinrichtung und der mindestens einen Sendeeinheit der mindestens einen Sendestation kommunikativ verbunden ist.

Die mindestens eine Sendestation und die mindestens eine Empfangsstation können kombiniert ausgebildet sein, indem sie zusammen mindestens einen Transceiver umfassen, der die Funktion mindestens einer Sendeeinheit der Sendestation und mindestens eines Empfängers der Empfangsstation erfüllt.

Gemäß einer Ausführungsform des Monitoringsystems kann zur Übermittlung der Daten zwischen den Messeinheiten und mindestens einem Empfänger der Empfangsstation und/oder mindestens einer Sendeeinheit der Sendestation eine Niedrigenergieweitverkehrnetzwerk-Funktechnologie (LPWAN) eingesetzt werden.

In einer besonders vorteilhaften Ausgestaltung der Erfindung umfasst die Sensorik zur Erfassung der Lage und Beschleunigung einen Beschleunigungsund/oder Lagesensor zur Erfassung dreiachsiger Beschleunigung, vorzugsweise einen Gyroskopsensor, um zu hohe Kräfte auf das Getränkefass zu detektieren und nachweisen zu können und/oder um durch die Überwachung der dreiachsigen Beschleunigung die Stand- und Bewegungszeiten des Getränkefasses detektieren und die Übermittlung von Geodaten darauf abstimmen zu können und/oder um durch Überwachung der dreiachsigen Beschleunigung eine erweiterte Positionsbestimmung vornehmen zu können.

Ein weiterer Aspekt der Erfindung betrifft ein Verfahren zur Überwachung von Getränkefässern mit den oben genannten Merkmalen für kohlensäurehaltige Getränke unter Verwendung des beschriebenen Monitoringsystems zwecks Qualitätsüberwachung, prädiktiver Wartung sowie der Warenstromsteuerung, umfassend die folgenden Verfahrensschritte:
A) Erfassung der Temperatur und Druckwerte und der seit der Abfüllung vergangenen Zeit für eine Anzahl n von geschlossenen Getränkefässern,
B) Erstellung und Speicherung von n Datensätzen über den Druck- und Temperaturverlauf für jedes der n erfassten Getränkefässer,
C) Ermittlung des Pearson'sche Korrelationskoeffizienten von Temperatur und Druck für jeden der n Datensätze, und/oder Ermittlung der Löslichkeitskonstanten aus den Druckwerten der Datensätze für jedes Getränkefass und
D) Detektion von Getränkefässern mit abnormalem Verhalten durch Vergleich innerhalb der Menge der ermittelten Pearson'schen Korrelationskoeffizienten und/oder der ermittelten Löslichkeitskonstanten, wobei das normale Verhalten aus der gesamten Menge der Getränkefässer geschätzt wird, und/oder durch Feststellung des Überschreitens eines zuvor festgelegten Schwellwertes für die Löslichkeitskonstante über einen zuvor festgelegten Zeitraum hinaus.

Der Pearson'sche Korrelationskoeffizient kann für jedes Getränkefass beispielsweise aus einer Anzahl k von Zyklen der Erwärmung und Abkühlung ermittelt werden. Mit Hilfe der ermittelten Löslichkeitskonstante kann auch der CO₂-Gehalt pro kg Bier ermittelt werden.

Gemäß einer Ausführung des erfindungsgemäßen Verfahrens werden in Schritt C) die ermittelten Löslichkeitskonstanten in einem Häufigkeitsdiagramm aufgetragen und daraus eine normalverteilte Dichtefunktion geschätzt. In Schritt D) wird dann jedes Getränkefass als Getränkefass mit abnormalem Verhalten detektiert, welches eine Löslichkeitskonstante aufweist, die vom Erwartungswert dieser Dichtefunktion um mehr als eine zuvor definierte Anzahl an Standardabweichungen entfernt ist. Die Anzahl der Standardabweichungen vom sich aus der normalverteilten Dichtefunktion von Löslichkeitskonstanten ergebenden Erwartungswert, deren Überschreitung zur Detektion eines Getränkefasses als Getränkefass mit abnormalem Verhalten führt, beträgt in der Regel mindestens 3.

Die Erfindung ermöglicht die prädiktive zustandsorientierte Instandhaltung des Ventileinsatzes und ermöglicht somit die maximale Ausnutzung des möglichen Verschleißvorrats und die Minimierung des Risikos eines unerwarteten Defekts und dem daraus resultierenden Produkt- und Imageschaden. Durch die sofortige Erkennung und Alarmierung von Beschädigungen wird weiterhin die Verbringung von defekten Fässern vermieden. Mittels der gewonnenen Daten lassen sich weiterhin eine systematische Schadensanalyse und Schwachstellenbeseitigung vornehmen sowie Maschinen und Kunden identifizieren, welche besonders verschleißintensiv mit Fässern umgehen.

Die Ortung der Fässer ermöglicht die Detektion von Diebstählen beziehungsweise unsachgemäßer Nutzung. Durch die Kopplung mit Metadaten kann eine Prognose der benötigten Menge des Getränkes für die Produktion oder für eine bestimmte gastronomische Einrichtung erfolgen.

Durch die Überwachung und Übermittlung der Daten in Echtzeit lassen sich die Produktqualität in Zusammenhang mit den Lagerbedingungen beim Kunden überwachen. Reklamationen und nicht sachgemäß behandelte Fässer können so in Verbindung gebracht und ausgewertet werden.

Vorteile des erfindungsgemäßen Verfahrens bestehen insbesondere gegenüber Systemen aus dem Stand der Technik, welche Fass-gebunden sind. Gemäß der Erfindung wird an einem Getränkefass lediglich der Ventileinsatz revisioniert und nicht das Getränkefass insgesamt. Der Ventileinsatz und der Getränkebehälter sind nicht zwangsläufig aneinandergebunden und können beliebig untereinander getauscht werden. Das erfindungsgemäße System (Verfahren) ist Ventileinsatz- beziehungsweise Fitting-gebunden und erlaubt somit Aussagen über den Lebenszyklus und den Zustand des Ventileinsatzes, während die aus dem Stand der Technik bekannten Systeme genau dies nicht erlauben. Zuverlässige Aussagen über den Zustand eines Ventileinsatzes sind von großem ökonomischen Interesse, da die einsetzende Sprödigkeit von Dichtungsgummis oft dazu führt, dass Ventileinsätze eingesetzt werden, die längst hätten revisioniert werden müssen. Undichte Ventileinsätze führen zu unkontrollierbaren Qualitätsschwankungen. Im schlimmsten Fall ist die Ware unverkäuflich. Ohne Monitoring können solche Qualitätsprobleme nur beim Ausschank, also zum Beispiel bei einer gastronomischen Einrichtung festgestellt werden. Dies führt zu Imageschäden sowie hohen Kosten, die durch die Rückführung der Ware und dem damit einhergehenden Abstimmungsbedarf entstehen.

Das erfindungsgemäße System bietet dem Verkäufer die Möglichkeit, vom Premiumgedanken zu profitieren, das heißt als Premiumanbieter wahrgenommen zu werden. Ein Premiumanbieter wird üblicherweise mit einer hohen Produkt- und Servicequalität in Verbindung gebracht. Durch die Verhinderung von Rückläufern werden beim Kunden keine negativen Eindrücke erzeugt. Die beschriebene Erfindung ermöglicht eine passgenaue Wartung sowie eine frühzeitige Erkennung von Qualitätsproblemen. Dadurch kann die hohe Produkt- und Servicequalität bei gleichzeitig sinkenden Unterhalts- und Rückläuferkosten erreicht werden.

Durch die Anwendung der Erfindung kann eine automatisierte Lieferung von Fässern erfolgen, insbesondere durch die Möglichkeit der Erkennung von leeren Fässern. Dadurch entfällt der Abstimmungsbedarf, die Lieferungen können dadurch vorausschauender geplant werden.

Die Integration der Geräte, das heißt der Sensoren und Sender, im Ventileinsatz führt zu einer größeren Robustheit der Geräte als bei extern angebrachten Geräten. Der Ventileinsatz steht als das Verschleißteil am Getränkefass somit im Fokus. Dadurch, dass das Getränkefass überall Datenverbindung aufweist, kann es auch lokalisiert werden.

Die Vermeidung von unnötigen Revisionen und unnötigem Materialeinsatz kann sowohl in ökonomischer als auch in ökologischer Hinsicht als Vorteil angesehen werden. Die vorausschauende Logistik kann dabei nicht zuletzt auch zu einer Reduktion von Kohlendioxidemissionen beitragen. Durch frühzeitige Identifizierung von vermeidbaren Standzeiten kann auch der Ausnutzungsgrad der Fässer erhöht werden. Dadurch ist eine Reduzierung der Fassflotte möglich, was zur Schonung von Ressourcen beiträgt.

Ebenso ist die Reduzierung der Vorhaltungsmenge karbonisierter Getränke durch die prädiktive Bedarfsplanung möglich. Dies führt zu Energieeinsparungen, insbesondere durch die Verringerung der notwendigen Kühlung, und gegebenenfalls auch zu einer Reduzierung benötigter Produktionsanlagen. Die verbesserte Möglichkeit zur Überwachung der Warenströme ist in ökonomischer Hinsicht nicht zuletzt deshalb besonders vorteilhaft, weil damit die Kosten entfallen, die ein Produzent normalerweise aufwenden muss, um vom Händler Informationen über die Distribution zu erhalten. Die Automatisierung von Bestellungen/Lieferungen führt darüber hinaus auch zu einem verminderten Abstimmungsbedarf und somit Personalreduktion. Zudem kann auch der Diebstahl von Fässern besser verhindert werden. Darüber hinaus können auch Wartungsmaßnahmen reduziert werden. Die für die Erfindung wesentliche Datenverbindung und Lokalisierung erzeugt während des Betriebes keine Kosten. Durch die frühzeitige Detektion von Leckagen können aufwendige Rückläufer vermieden werden. Aufwendige Rückläufer sowie die damit verbundenen Imageschäden können auch durch die Detektion von Ausreißern in einer Abfüllung vermieden werden.

Im Unterschied zu den oben genannten Verfahren nach dem Stand der Technik können die gewonnenen Daten der Druck- und Temperaturmessung sowie der Ortsbestimmung mittels Verfahren des maschinellen Lernens zusammengeführt und ausgewertet werden: Aus den gewonnenen Informationen können dann unter Anderem notwendige Ersatzvorräte für Verschleißteile, Revisionsmaßnahmen sowie Warenströme vorausgesagt werden. Durch die Verbindung mit weiteren Daten, wie zum Beispiel Wetterdaten und Daten zur Jahreszeit, kann dann die Absatzmenge prognostiziert werden.

Anders als in den Verfahren nach dem Stand der Technik kann mit dem erfindungsgemäßen Verfahren eine bidirektionale Kommunikation gewährleistet werden. Dadurch ist es möglich, während der Laufzeit der Komponente Veränderungen am Steuerungsprogramm, was einem Firmware-Update entspricht, und den zugehörigen Parametern, zum Beispiel dem Sendeintervall, vorzunehmen. Weiterhin kann durch die Nutzung von Sende-Empfängerkombinationen, sogenannten Transceivern, aktiv ein Kommunikationsprozess angestoßen werden. Das heißt, dass es möglich ist, Fässer zu identifizieren oder eine gespeicherte Datenhistorie auszulesen.

Die bisher bekannten Überwachungssysteme für Getränkefässer erlaubten es nicht, Sendezyklen temporär zu verändern, also zum Beispiel als verdächtig identifizierte Fässer dazu zu bewegen, häufiger zu senden als unverdächtige Fässer, um schneller reagieren zu können. Dadurch, dass die Messungen der Temperatur innerhalb des Fasses ausgeführt werden, können zeitnah genauere und zuverlässigere Daten erhalten werden als dies bei Messungen am beziehungsweise außerhalb des Fasses möglich ist.

Zur Übermittlung der Daten kann eine Niedrigenergieweitverkehrnetzwerk-Funktechnologie (LPWAN = Low Power Wide Area Network) eingesetzt werden. Derartige Funktechnologien arbeiten im Megahertz-Bereich und weisen eine sehr gute Reichweite und eine hohe Durchdringung bei einem sehr niedrigen Energieverbrauch auf. Anders als bei Lösungen gemäß dem Mobilfunkstandard GSM (GSM = Global system for Mobile Communications) ist es nicht notwendig, dass der Sensor dauerhaft in einem Netzwerk angemeldet ist. Vielmehr ist es möglich, den Sensor in einen Stromsparmodus zu versetzen und diesen nur gelegentlich zum Messen und Übermitteln der Messwerte zu "wecken". Dieser niedrige Energieverbrauch lässt sich dann durch Verfahren wie Energy Harvesting abdecken, wodurch unter Umständen sogar auf den Einbau von Batterien verzichtet werden kann.

Der Sensor übermittelt seine Messwerte vorzugsweise über einen Uplink. Ein Uplink ist ein Datenpaket, welches die Statusinformationen des Getränkefasses an den Nutzer beinhaltet. Dieses Paket wird zunächst in einem vorher festgelegten Intervall gesendet. Sollte der Sensor einen Druckabfall außerhalb eines Toleranzbereiches feststellen, so kann der Sensor auch außerhalb dieses Intervalls einen Uplink senden. Auch LPWAN-Technologien erlauben das Triangulieren eines Signals und somit eine Standortbestimmung des Fasses, ohne dass dieses mit einem GPS-Modul (GPS = Globales Positionsbestimmungssystem) ausgestattet sein muss. Die Bestimmung des Standortes erfolgt also immer dann automatisch, wenn das Fass einen Uplink sendet.

In einer Ausführungsform des erfindungsgemäßen Verfahrens erfolgt die Übermittlung der durch die Sensorik erfassten Daten von Druck, Temperatur und Ort als Datenpaket an den Nutzer des Monitoringsystems zunächst in einem von der Sensorik für die Erfassung der Beschleunigung, vorzugsweise durch einen Gyroskopsensor, gesteuerten Intervall, so dass die Daten übermittelt werden, wenn das Fass bewegt wird. Die Sensorik für die Erfassung der Beschleunigung, die vorzugsweise als installierter Gyroskopsensor ausgebildet ist, erkennt, wenn das jeweilige Getränkefass bewegt wird und teilt gegebenenfalls über die Kommunikationseinrichtung mit, dass dieses Fass Qualitätsmängel aufweist und zum Beispiel nicht verladen werden darf. Vorteilhafterweise können aber auch Daten übermittelt werden, wenn die Sensorik zur Erfassung der Lage und Beschleunigung eine Bewegung detektiert hat und wieder zur Ruhe gekommen ist. So kann nach einem zuvor festgelegten Zeitraum nach der letzten Bewegung des Getränkefasses, beispielsweise fünf Minuten danach, ein Datenpaket (Uplink) an den Nutzer des Monitoringsystems gesendet werden. Das Getränkefass könnte somit während des Transports bewegt werden, ohne dass ständig Informationen gesendet werden. Erst wenn das Getränkefass dann wieder den festgelegten Zeitraum, beispielsweise fünf Minuten steht, werden wieder Informationen aus dem Getränkefass übermittelt.

Unabhängig davon sollte täglich eine festgelegte Zahl an Zustandsmessungen, vorzugsweise zwei Zustandsmessungen, über den Ort und aktuelle Daten zu Druck, Temperatur und gegebenenfalls über den Batteriestand, übermittelt werden.

Über einen Downlink, also ein Datenpaket, das an das Fass gesendet wird, lässt sich die Sensorik und/oder die Kommunikationseinrichtung beziehungsweise die jeweils dazugehörige Software konfigurieren und updaten. Somit ist es möglich, das Sendeintervall oder die Toleranzbereiche des jeweiligen Sensors beziehungsweise der Kommunikationseinrichtung zu ändern, ohne dass dafür der physische Zugang zum Sensor oder zur Kommunikationseinrichtung notwendig ist. Auf diese Weise können die Sendeintervalle und/oder die Toleranzbereiche der durch die Sensorik erfassten Messwerte eines Getränkefasses durch eine Datenübertragung von der mindestens einen Sendestation des Monitoringsystems an die Messeinheit im Getränkefass temporär verändert werden. Durch einen Downlink kann dem Getränkefass eine Identifikationsnummer (ID) zugewiesen oder die Ausführung von Programmen auf einem in der Messeinheit des Getränkefasses enthaltenen Computer ausgelöst werden. Die Messeinheit eines Getränkefasses, das zum Beispiel als eines abnormalen Verhaltens verdächtig identifiziert wurde, kann durch eine Signalübertragung dazu veranlasst werden, häufiger zu senden als die Messeinheiten unverdächtiger Getränkefässer.

Gemäß einer vorteilhaften Ausgestaltung des erfindungsgemäßen Verfahrens können, wie bereits erwähnt, die gewonnenen Daten der Druck- und Temperaturmessung sowie der Ortsbestimmung der Getränkefässer mittels Verfahren des maschinellen Lernens zusammengeführt und ausgewertet werden. Die zusammengeführten Daten können genutzt werden, um notwendige Ersatzvorräte für Verschleißteile, Revisionsmaßnahmen und Warenströme vorauszusagen. Die Daten der Druck- und Temperaturmessung können auch mit Wetterdaten und/oder Daten zur Jahreszeit kombiniert werden, um die Absatzmenge zu prognostizieren.

Weitere Einzelheiten, Merkmale und Vorteile von Ausgestaltungen der Erfindung ergeben sich aus den Figuren und der nachfolgenden Beschreibung von Ausführungsbeispielen. Es zeigen die
- **Figur 1:**: eine schematische Darstellung eines Ventileinsatzes (Fitting) für Getränkefässer, insbesondere Kegfässer,
- **Figur 2:**: ein Diagramm, das die Entwicklung des Verschleißvorrates über die Zeit abbildet,
- **Figur 3:**: ein Diagramm, das einen linearen Zusammenhang von Temperatur und Druck in Getränkefässern mit und ohne vorliegendem Defekt darstellt,
- **Figur 4:**: ein Diagramm, das den zeitlichen Temperatur- und Druckverlauf eines Fasses mit intaktem Ventileinsatz (Fitting) nach der Abfüllung zeigt und
- **Figur 5:**: ein Diagramm, das den zeitlichen Temperatur- und Druckverlauf eines Fasses mit undichtem Ventileinsatz (Fitting) nach der Abfüllung zeigt,
- **Figur 6:**: den Lebenszyklus eines Getränkefasses in Form eines Bierfasses bei Anwendung eines Monitoringsystems,
- **Figur 7:**: eine schematische, grafische Darstellung der Verteilung der Temperatur- und Druckverhältnisse in einer Menge von Bierfässern bei Anlieferung der Getränkefässer nach Gebrauch (Leerfässer),
- **Figur 8:**: eine schematische, grafische Darstellung der Verteilung der Temperatur- und Druckverhältnisse in einer Menge von Bierfässern bei der Zwischenlagerung der Leerfässer und die Identifizierung defekter Getränkefässer,
- **Figur 9:**: eine schematische, grafische Darstellung der Verteilung der Temperatur- und Druckverhältnisse in einer Menge von Bierfässern nach einer Reinigung der Leerfässer,
- **Figur 10:**: eine schematische, grafische Darstellung der Verteilung der Temperatur- und Druckverhältnisse in einer Menge von Bierfässern nach einer Befüllung mit Bier,
- **Figur 11:**: eine schematische, grafische Darstellung der Verteilung der Temperatur- und Druckverhältnisse in einer Menge von befüllten Bierfässern bei einer Zwischenlagerung und
- **Figur 12:**: eine schematische, grafische Darstellung der übermittelten Wertepaare von Druck und Temperatur einer Menge von Bierfässern mit großen Unterschieden in Temperatur und Druck.

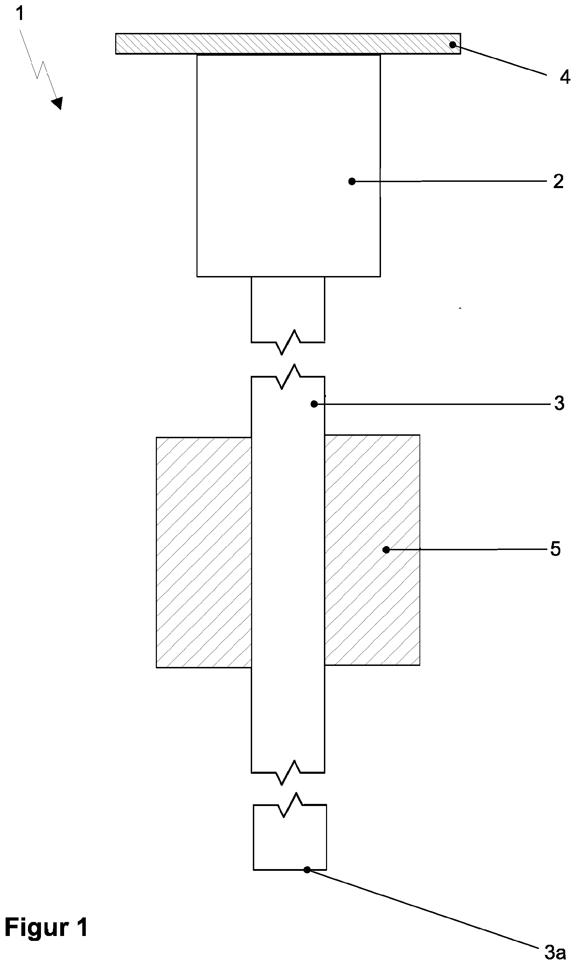

Die **Figur 1** zeigt eine schematische Darstellung eines Ventileinsatzes 1 eines Getränkefasses für ein kohlensäurehaltiges Getränk. Das Getränkefass umfasst einen in der Regel zylindrischen Fasskörper, der in Figur 1 nicht dargestellt ist, mit einer ersten, oberen Stirnseite und einer zweiten, unteren Stirnseite. An der oberen Stirnseite ist der Ventileinsatz 1 als austauschbares Verschleißteil befestigt.

Der Ventileinsatz 1 ist derart ausgebildet, dass er mindestens einen durch den Ventileinsatz hindurch verlaufenden Strömungsweg für fluide Medien bereitstellt, der mittels eines in Figur 1 nicht gezeigten Ventils öffen- und schließbar ist.

Der Ventileinsatz umfasst gemäß der schematischen Darstellung in Figur 1 Folgendes:
> eine Hülse 2,
> mindestens ein Steigrohr 3 mit einem ersten, in der Hülse 2 befestigten Ende und einem zweiten, freien Ende 3a als Teil des durch den Ventileinsatz hindurch verlaufenden Strömungsweges,
> mindestens ein Ventil, welches in der Figur 1 nicht gezeigt ist, mittels dem der Strömungsweg, der durch das Steigrohr 3 führt, öffen- und schließbar ist,
> einen Verbindungsbereich 4 für die Befestigung des Ventileinsatzes 1 im Getränkefass, das heißt zur Befestigung an der ersten Stirnseite des Fasskörpers,
> mindestens ein Abdichtungselement für die Abdichtung des Getränkefasses im Bereich des Verbindungsbereichs 4 nach außen,
> mindestens eine Messeinheit 5, die Messtechnik, Elektronik und Sensorik zur Erfassung von Druck, Temperatur, Lage und Beschleunigung und zur Ortsbestimmung sowie Mittel zur Identifikation des Ventileinsatzes, Mittel zum Senden und Empfangen von Daten, die mit der Sensorik zur Erfassung von Druck, Temperatur, Lage und Beschleunigung und zur Ortsbestimmung kommunikativ verbunden sind, sowie Mittel zur Stromversorgung umfasst, wobei die mindestens eine Messeinheit 5 in einem Bereich, der zwischen dem einen Verbindungsbereich 4 für die Befestigung des Ventileinsatzes 1 im Getränkefass und dem freien Ende 3a des Steigrohrs 3 liegt, platziert ist und in mindestens einer Hülle oder mindestens einem Gehäuse aus lebensmittelechtem Material wasserdicht eingehaust ist.

In der gezeigten Ausführungsform ist die Messeinheit 5 mit ihrem Gehäuse am Umfang des Steigrohrs 3 angebracht.

Insbesondere weist der Ventileinsatz 1 zur Abdichtung des Getränkefasses nach außen Abdichtungselemente wie Dichtungsgummis auf, die einem natürlichen Verschleiß, beispielsweise durch einsetzende Sprödigkeit, unterliegen. An dem Ventileinsatz wird üblicherweise ein in Figur 1 nicht gezeigter Zapfkopf angebracht.

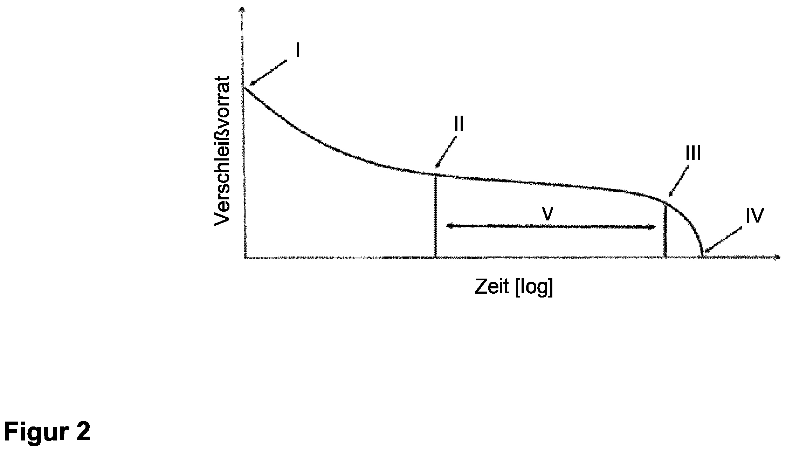

Die **Figur 2** zeigt den Verschleißvorrat eines neuen Ventileinsatzes. Die Ziffer I entspricht dem Zeitpunkt unmittelbar nach Einbau eines neuen Ventileinsatzes, welcher dann über mehrere Be- und Entfüllungen an Verschleißvorrat verliert. Eine Revision des Ventileinsatzes in festen zyklischen Intervallen, dargestellt durch die Ziffer II, würde wertvollen Verschleißvorrat verschwenden, wie durch den der Ziffer V zugeordneten Pfeil schematisch dargestellt. Ein reaktiver Austausch, dargestellt durch die Ziffer IV, würde zu Produkt- und Imageschaden führen. Gemäß der Erfindung soll deshalb der optimale Zeitpunkt, angezeigt durch Ziffer III, ermittelt und als Information dem Kunden zur Verfügung gestellt werden.

Die Erfindung soll darüber hinaus die Verbringung von Fässern inklusive Ventileinsätzen analysieren sowie eine Kontrolle der Warenströme ermöglichen. So kann eine unrechtmäßige Nutzung von Fässern, zum Beispiel das Abfüllung in einer anderen Brauerei, nachgekommen werden beziehungsweise kann der Eigentümer das Distributionsnetzwerk nachvollziehen. Durch die Kopplung mit Metadaten wie Wetter, Jahreszeit und/oder Historie können Warenströme prognostiziert werden und Abfüllungen geplant werden. Somit muss kein "unnötiges" Vollgut vorgehalten werden.

Außerdem soll die Erfindung eine Überwachung der Qualität der Produkte ermöglichen, zum Beispiel mittels Überwachung des Kohlensäuregehaltes in Getränkefässern mit kohlensäurehaltigem Getränk.

Darüber hinaus soll der Nutzer, wenn Getränkefässer, zum Beispiel Bierfässer, direkt nach der Befüllung einen plötzlichen Druckverlust aufgrund eines beschädigten Ventileinsatzes erleiden, eine Warnung erhalten, damit er diese defekten Fässer noch vor der Verbringung an seinen Kunden identifizieren und unnötige Transport- und Reklamationskosten sowie einen Imageschaden vermeiden kann.

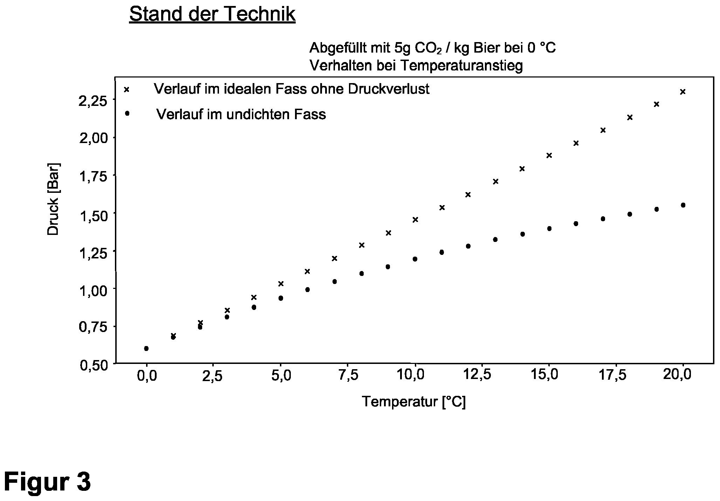

Die vorteilhafte Möglichkeit der prädiktiven Wartung basiert auf dem Feststellen eines unüblichen Druckverlustes. Um diesen unüblichen Druckverlust detektieren zu können, stehen zwei Merkmale zur Verfügung: die Temperatur und der Druck. In der **Figur 3** sind diese Zusammenhänge am Beispiel eines Bierfasses, welches bei 0 °C mit 5 g CO₂/kg Bier abgefüllt wurde, für einen Temperaturanstieg bis auf 20 °C dargestellt. Es ergibt sich ein linearer Zusammenhang zwischen Temperatur und Druck mit einem konstanten Gradienten. Merkmalstupel (Datensätze), das heißt Temperatur- und Druckwerte, die sich von der Optimal-Linie entfernen, deuten auf Druckverlust hin. Ein Druckverlust führt zu einer geringeren Menge CO₂/kg Bier und somit zu einer sich nach unten verschiebenden Kurve. Zudem wird die Abweichung zur Optimal-Linie mit ansteigendem Druck tendenziell größer. Ein weiterer Vorteil ist, dass sich der CO₂-Gehalt pro kg Bier anhand des Gradienten für fehlerfreie Fässer ermitteln lässt.

Mithilfe des Henry-Gesetzes kann für jedes Temperatur-Druck-Tupel die dimensionslose Löslichkeitskonstante bestimmt werden, die im besten Fall konstant sein sollte, was einem idealen Fass entsprechen würde. Bei einem idealen Fass beträgt der Pearson'sche Korrelationskoeffizient von Temperatur und Druck mehrerer Stichproben, also Temperatur-Druck-Tupel, immer eins. Dies gilt auch für n Temperatur-Druck-Tupel, die sich bei Erwärmung und Abkühlung in k Zyklen ergeben.

Ein defektes Fass, welches Druck innerhalb von Erwärmungs- und Abkühlungszyklen verliert, führt zu einer anderen Formation in der Merkmalsebene, was wiederum zu einem abnehmenden Pearson'schen Korrelationskoeffizienten führt. Zudem wird die seit der Abfüllung vergangene Zeit erfasst.

### Abfüllung einer Menge Fässer mit dem gleichen kohlensäurehaltigen Getränk:

I) Bei einer Abfüllung werden sehr große Mengen Fässer abgefüllt (»100). Werden von all diesen Fässern die Pearson'schen Korrelationskoeffizienten ermittelt, kann ein Vergleich innerhalb dieser Menge erfolgen. Ohne Kenntnis des Normalzustandes lassen sich so Ausreißer ermitteln, also Fässer, die ein abnormales Verhalten zeigen, wobei das normale Verhalten aus der gesamten Menge geschätzt wird.
II) Die Detektion von abnormalen Fässern kann außerdem über die zuvor erläuterte dimensionslose Löslichkeitskonstante erfolgen. Bei einer großen Menge n von Fässern wird es produktionsbedingt, zum Beispiel aufgrund von Druckunterschieden, zu Abweichungen dieser Konstante kommen. Wird die ermittelte Löslichkeitskonstante in einem Häufigkeitsdiagramm aufgetragen, lässt sich daraus zum Beispiel eine normalverteilte Dichtefunktion schätzen. Wird eine Löslichkeitskonstante ermittelt, die sich vom Erwartungswert dieser Dichtefunktion beispielsweise mehr als drei Standardabweichungen entfernt, dann wird dieses Fass automatisch als nicht normal klassifiziert.

### Big Data:

In diesem Zusammenhang werden sämtliche Informationen, wie Druck, Temperatur, Warenströme und/oder Rückkopplungen von Produzenten, genutzt, um zum Beispiel ein neuronales Netz zu trainieren, beziehungsweise eine Regression zu berechnen. Dieses Netz beziehungsweise die Regression ist nach der entsprechenden Anlernphase in der Lage, eine direkte prädiktive, das heißt eine zukunftsgerichtete Auskunft zu einem beliebigen Fass zu geben. Verbleibende Befüllungen bis zur Revision in Abhängigkeit der Lagertemperatur und Lagerdauer, erfolgte Abfüllungen, Maßnahmen zur Erhöhung der Abfüllungsanzahl bis zur Revision, der Getränkebedarf einer Einrichtung, die Getränkeerzeugung einer Produktion und andere Voraussagen können auf diese Weise abgeleitet werden.

Vorteile ergeben sich auch hinsichtlich der Qualitätssicherung. Auch im Rahmen der Qualitätssicherung erfolgt die Detektion von abnormalen Fässern, wie bereits weiter oben im Zusammenhang mit der Abfüllung einer Menge Fässer mit dem gleichen kohlensäurehaltigen Getränk beschrieben. Zudem werden die Temperatur und die Zeitdauer dieser Temperatur, beispielsweise für Lagerung und/oder Transport, ermittelt. Eine unsachgemäße Lagerung wird gemeldet. Wird ein Fass angestochen, also entleert, dann wird auch die Menge und Dauer der Entnahme gemessen. Nach einer definierten Dauer muss das Fass, genauer der eventuell verbleibende Inhalt, entsorgt werden. Diese Meldung erfolgt automatisch.

Die Erfindung bietet auch einen effektiven Schutz vor Diebstählen. Fässer für kohlensäurehaltige Getränke sind teure Assets, die durch die im Vergleich zum Anschaffungspreis geringen Pfandkosten nicht ausreichend vor Diebstahl, Umlabelung, privater Verwendung und andere unerlaubte Handlungen geschützt sind. Die genaue Kenntnis über Abfüllzeitpunkt und Ort erlaubt es dem Besitzer, derartige Handlungen festzustellen.

Die Erfindung führt auch zu einer verbesserten Logistik. So ist es jederzeit möglich, eine Reihe von Parametern in Echtzeit auszuwerten. Im Hinblick auf logistische Optimierung sind dies vor allem: Standort, Befüllungszustand sowie Wartungs- und Ausfallwahrscheinlichkeit. Mit Hilfe dieser Größen ist es möglich, zu antizipieren, welchen Leerguteingang der Nutzer zu erwarten hat. Das heißt, es kann abgeschätzt werden, in welchem Zeitraum welche Quantität von Leergut zur Verfügung steht. Außerdem kann auch abgeschätzt werden, welche Abnutzung an den Pfandgütern zu erwarten ist. Dadurch ergibt sich eine Optimierung im Beschaffungsszenario. Der Nutzer muss nicht mehr ad hoc neue Getränkefässer beschaffen, sondern kann diesen Prozess im Voraus organisieren. Dadurch, dass keine kurzfristigen Anschaffungen mehr getätigt werden müssen, kann es vermieden werden, die branchenüblichen Aufschläge für das Pfandgut selbst, wie Express-Aufschläge, oder für die dazugehörigen logistischen Prozesse aufzuwenden. Die Wahrscheinlichkeit von Lieferverzug oder Ausfällen lässt sich deutlich reduzieren. Weiterhin kann der Nutzer seinen Lagerbestand an Leergut, der zur Abfüllung vorgehalten wird, verringern. Dadurch können wiederum intralogistische Kosten minimiert und die Kapitalbindung innerhalb des Unternehmens, zum Beispiel einer Brauerei, gesenkt werden.

Zudem kann der Ausnutzungsgrad der Fassflotte ermittelt werden. Orte und Prozesse, an denen die Fässer lange ungenutzt stehen, werden ermittelt. Standzeiten können verringert werden.

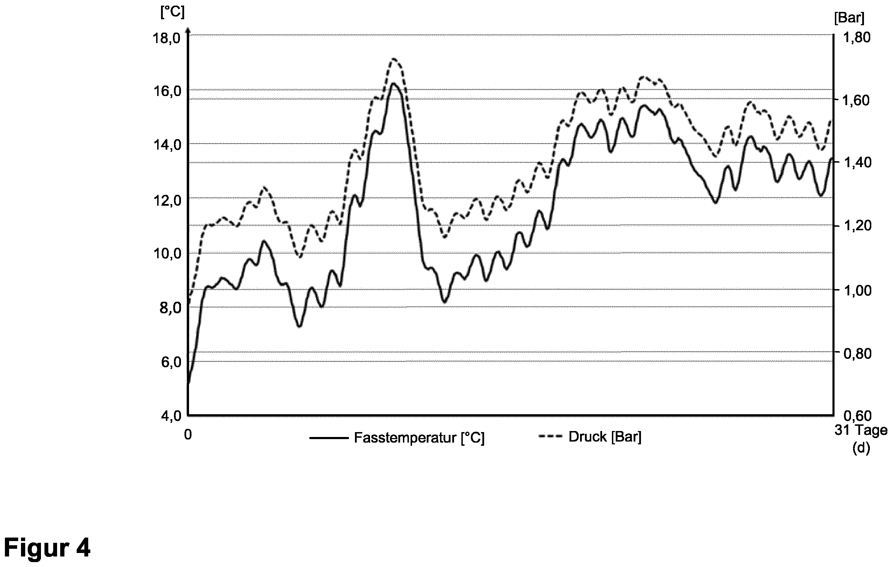

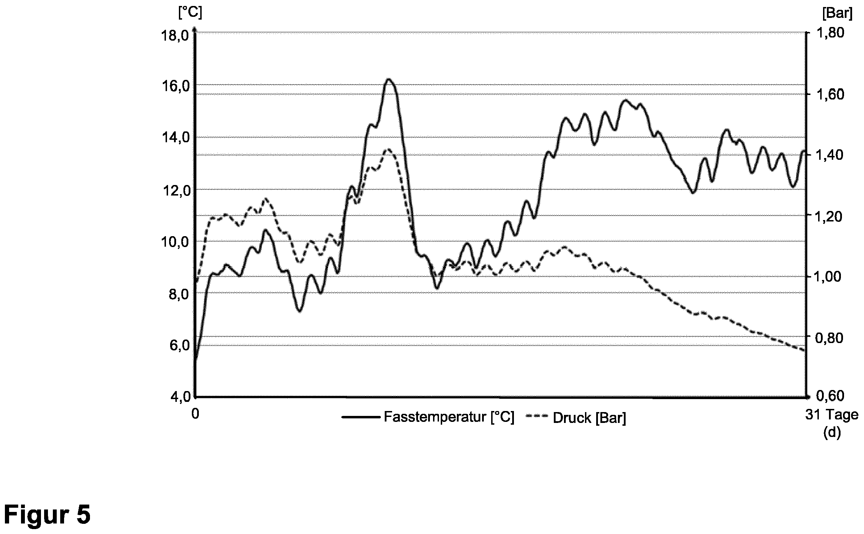

Zur Verdeutlichung der unterschiedlichen Szenarien, werden **Figur 4** und **Figur 5** die charakteristischen Verläufe in einem Getränkefass gegenübergestellt. Dabei zeigt die Figur 4 den Temperatur- und Druckverlauf eines 50-Liter-Kegfasses mit intaktem Ventileinsatz unmittelbar nach der Abfüllung über einen Zeitraum von 31 Tagen. Die Figur 5 zeigt den Temperaturund Druckverlauf eines 50-Liter-Kegfasses mit undichtem Ventileinsatz unmittelbar nach der Abfüllung über einen Zeitraum von 31 Tagen.

Aus der Figur 4 lässt sich leicht erkennen, dass der Hüllkurvenverlauf des Drucks dem der Temperatur bei einem intakten Ventileinsatz entspricht. Ist ein Ventileinsatz defekt, dann entweicht zunehmend Druck aus dem Getränkefass, was dem Verlauf gemäß Figur 5 entspricht. Zwar sind die Verlaufsformen der beiden Messgrößen anfangs noch nahezu identisch, verlieren dann aber zusehends an Ähnlichkeit. Mittels eines Mustererkennungs-Algorithmus lässt sich bereits frühzeitig ableiten, dass das Fass defekt ist und eine Revision benötigt. In diesem Fall würde eine Auslieferung an den Kunden unterbleiben. Auf diese Weise können sich sowohl die Brauerei als auch die Kunden den für beide aufwendigen und unter Umständen kostspieligen Reklamationsprozess sparen.

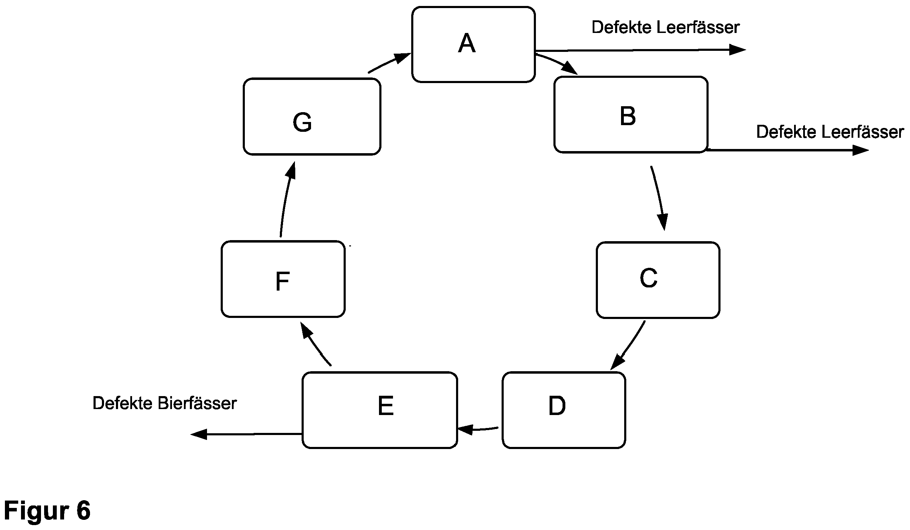

Die **Figur 6** zeigt den Lebenszyklus eines Bierfasses mit den Lebensphasen A bis G bei Anwendung des beschriebenen Monitoringsystems. Dieser Lebenszyklus beginnt mit Lebensphase A, der Anlieferung der Leerfässer. Als Leerfässer sollen im Folgenden Getränkefässer bezeichnet werden, deren Inhalt nicht weiter verbraucht wird und die daher zur Neubefüllung bei der Brauerei angeliefert werden. Bereits in dieser Phase können defekte Bierfässer, die in dieser Phase als Leerfässer vorliegen, identifiziert und ausgeschleust werden. Auf die Anlieferung folgt eine Zwischenlagerung der angelieferten Leerfässer als Lebensphase B der angelieferten Leerfässer. Auch während dieser Zwischenlagerung B können defekte Bierfässer, die in dieser Phase immer noch als Leerfässer vorliegen, identifiziert und ausgeschleust werden. In der Lebensphase C werden die Bierfässer einer Reinigung unterzogen. Nach der Reinigung wird in Lebensphase D eine (Neu-)Befüllung der Bierfässer vorgenommen, worauf eine Zwischenlagerung E der befüllten Bierfässer folgt. Auch in der Lebensphase E, der Zwischenlagerung der befüllten Bierfässer, können defekte Bierfässer identifiziert und ausgeschleust werden, bevor intakte Bierfässer in Lebensphase F zum Kunden transportiert werden können. Die Nutzung beziehungsweise Leerung der Bierfässer beim Kunden stellt dann die letzte Lebensphase G eines Bierfasses dar, bevor der Lebenszyklus mit der Lebensphase A, der Anlieferung des gebrauchten Leerfasses, erneut beginnt.

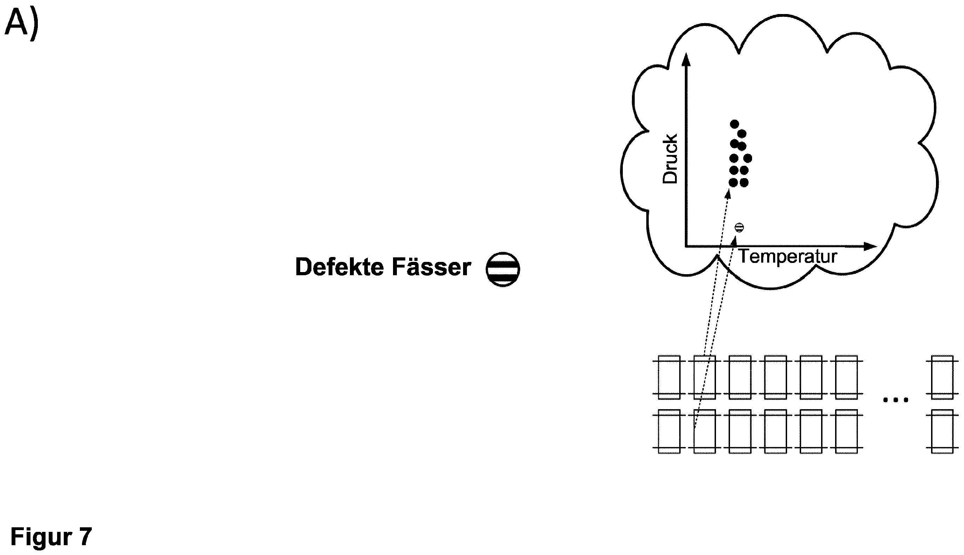

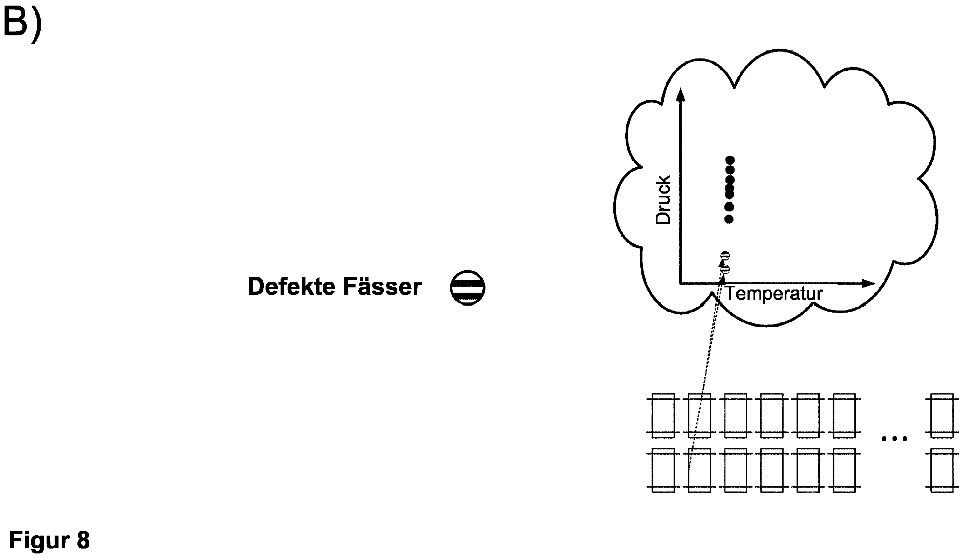

Aus der grafischen Darstellung in **Figur 7** geht hervor, dass bereits bei der Anlieferung A über die Leerfässer eine heterogene Druckverteilung vorliegt, das heißt, in den Leerfässern herrschen verschiedene Innendrücke. Ebenso liegen in der Regel auch verschiedene (Rest-)Füllstände in den Leerfässern vor. Die Temperaturen sind dagegen sehr ähnlich. Die Figur 7 illustriert, dass bereits bei der Anlieferung A der Leerfässer aus der Druckverteilung defekte Bierfässer identifizierbar sind. Bei defekten Bierfässern weicht der Innendruck deutlich vom Druckbereich ab, in dem die Innendrücke der übrigen Bierfässer liegen, wie es in der Figur 7 schematisch dargestellt ist. Auf die Anlieferung folgt eine Zwischenlagerung als Phase B. Auch bei der Zwischenlagerung der Leerfässer liegen eine heterogene Druckverteilung über die Leerfässer und verschiedene Füllstände vor. Bei der Zwischenlagerung der Leerfässer ist davon auszugehen, dass die Temperatur in allen Leerfässern gleich ist. Die grafische Darstellung in der **Figur 8** zeigt schematisch, wie auch bei der Zwischenlagerung B der Leerfässer aus der Druckverteilung defekte Bierfässer durch eine deutliche Abweichung des Innendrucks vom Innendruckbereich, in dem die Innendrücke der meisten Bierfässer liegen, identifizierbar sind.

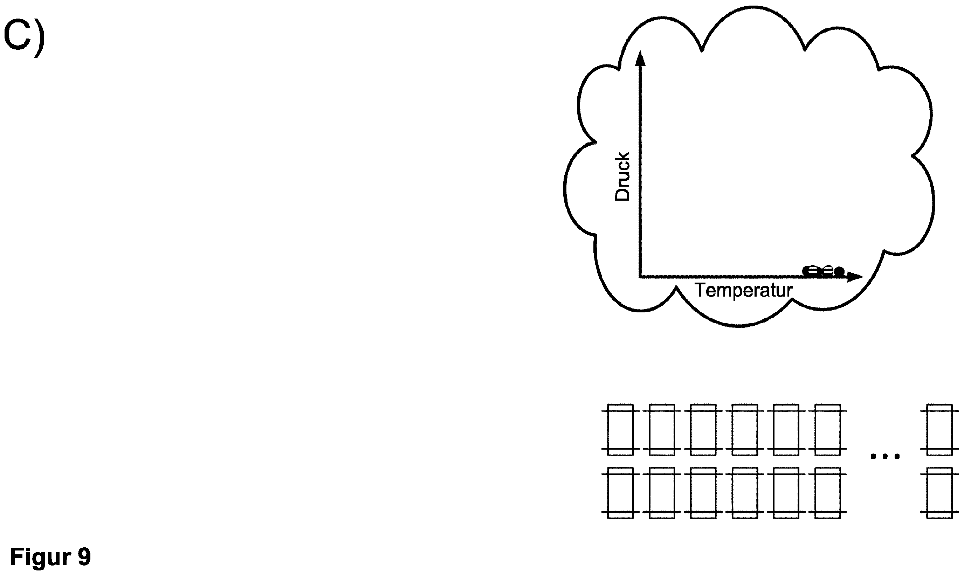

Die **Figur 9** zeigt eine schematische, grafische Darstellung der Verteilung der Temperatur- und Druckverhältnisse in einer Menge von Bierfässern nach einer Reinigung C der Leerfässer. Die Bierfässer sind in dieser Phase drucklos, das heißt der Innendruck der Bierfässer ist gleich dem Umgebungsdruck, während in allen Bierfässern gleich hohe Temperaturen vorliegen. In dieser Lebensphase C ist eine Identifikation defekter Bierfässer zumindest nicht über Druck- und Temperaturmessungen möglich.

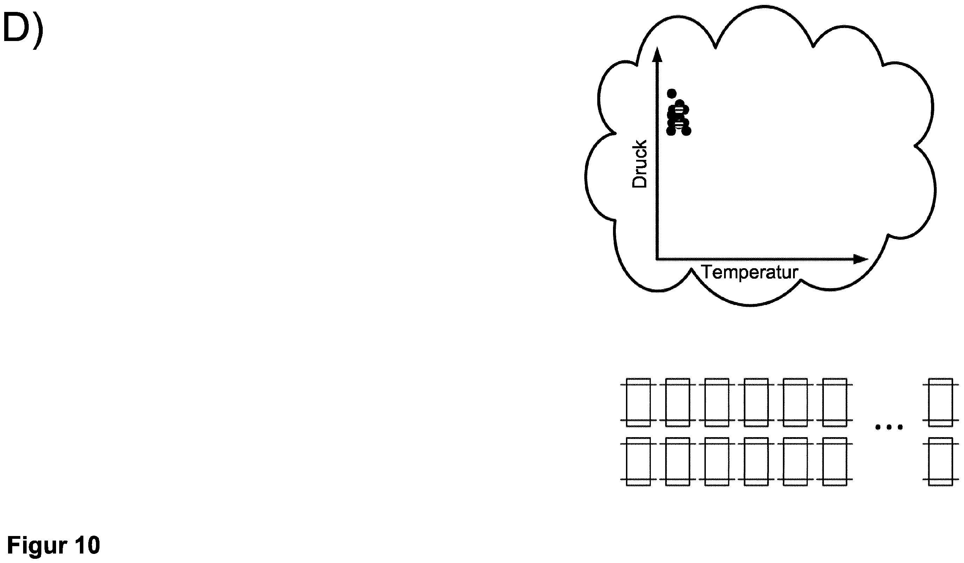

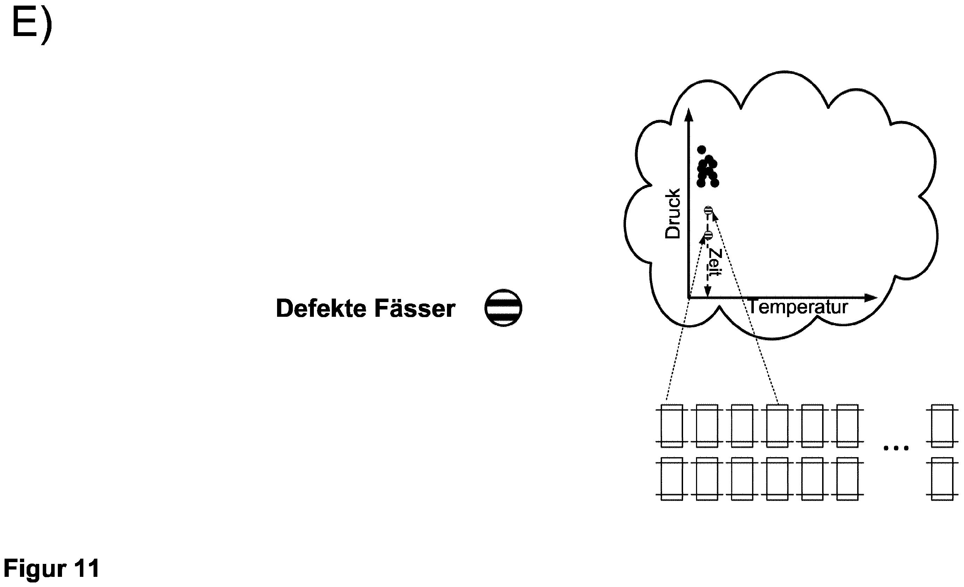

Die **Figur 10** zeigt eine schematische, grafische Darstellung der Verteilung der Temperatur- und Druckverhältnisse in einer Menge von Bierfässern nach der (Neu-)Befüllung mit Bier. Die schematische Darstellung illustriert, dass kurz nach der Neubefüllung in allen Bierfässern im Wesentlichen gleiche, zumindest aber sehr ähnliche Drücke und Temperaturen vorliegen. Aus der schematischen Darstellung in Figur 10 wird deutlich, dass in dieser Lebensphase D eine Identifikation defekter Bierfässer über Druck- und Temperaturmessungen noch nicht möglich ist. Diese ist erst in der darauffolgenden Lebensphase E, der Zwischenlagerung der befüllten Bierfässer, möglich, wobei die entsprechende Verteilung der Temperatur- und Druckverhältnisse in den befüllten Bierfässern in der **Figur 11** schematisch dargestellt ist. Defekte Bierfässer sind dann durch mit der Zeit langsam sinkenden Druck identifizierbar, wobei die Temperaturprofile der zwischengelagerten Bierfässer ähnlich sind.

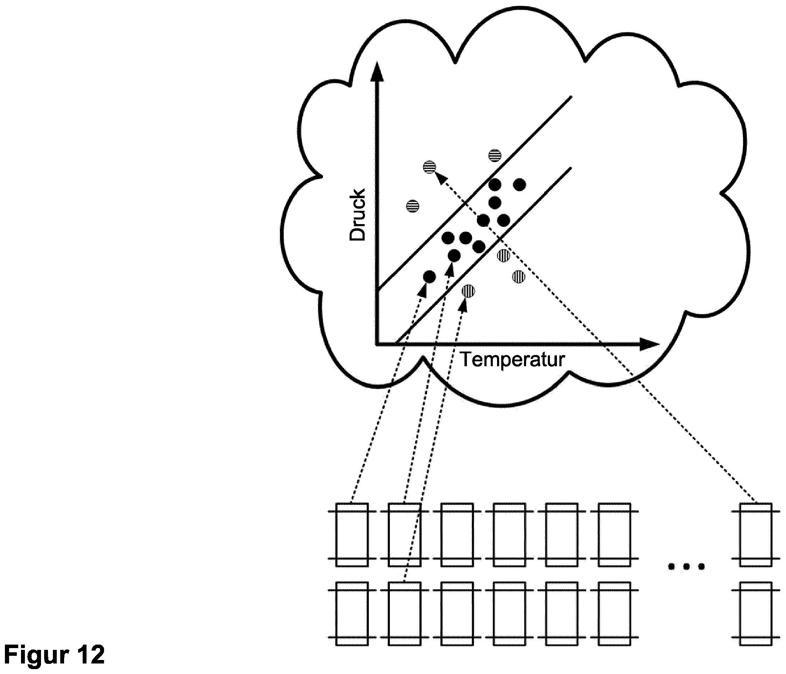

In **Figur 12** sind schematisch die übermittelten Wertepaare von Druck und Temperatur einer Menge von n Bierfässern mit großen Unterschieden in Temperatur und Druck dargestellt. Der Druck steigt bei einem ordnungsgemäß funktionierenden Bierfass mit steigender Temperatur linear an. Die unter dem Diagramm dargestellten Fässer sollen die Abfüllung einer Menge von n Bierfässern skizzieren. Alle n Bierfässer übermitteln ihre Wertepaare von Druck und Temperatur beispielsweise mittels drahtloser Long-Range-Modulation (LoRa), welche eine Kommunikation mit sehr geringem Stromverbrauch ermöglicht, in die "Cloud", das heißt, an eine externe Recheneinrichtung zur Speicherung und gegebenenfalls zur Auswertung der Daten.

Aus der Gesamtheit wird ein Normalzustand geschätzt. Alle Bierfässer, die Wertepaare liefern, welche gewissen Grenzen nicht überschreiten, wobei diese Grenzen in Figur 12 durch parallele schwarze Linien und die entsprechenden Wertepaare durch schwarze Kreisflächen angezeigt sind, werden als ordnungsgemäß funktionsfähig definiert. Bierfässer mit zu hohem Druck, dargestellt durch quer schraffierte Kreisflächen, weisen auf Qualitätsprobleme bezüglich des Getränks selbst hin. Bierfässer mit zu niedrigem Druck, dargestellt durch senkrecht schraffierte Kreisflächen, können ebenfalls auf Qualitätsprobleme bezüglich des Getränks, aber auch auf Undichtigkeiten hinweisen.

Sobald ein Wertepaar von Druck und Temperatur in einem Bierfass nicht dem linearen Zusammenhang zwischen Druck und Temperatur entspricht, ist dies entweder Folge einer Undichtigkeit oder, bei steigendem Druck, eines Anschlusses in einer gastronomischen Einrichtung, in der der Druck zum Fördern des Bieres erhöht wird.

### Bezugszeichen

- 1: Ventileinsatz (Fitting)
- 2: Hülse
- 3: Steigrohr
- 3a: freies Ende des Steigrohrs
- 4: Verbindungsbereich
- 5: Messeinheit

## Patentansprüche

1. Ventileinsatz (1) eines Getränkefasses, wobei der Ventileinsatz (1) derart ausgebildet ist, dass er mindestens einen durch den Ventileinsatz hindurch verlaufenden Strömungsweg für fluide Medien bereitstellt, der mittels eines Ventils öffen- und schließbar ist, und der Ventileinsatz (1) Folgendes umfasst:
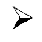 mindestens eine Hülse (2),
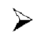 mindestens ein Steigrohr (3) mit einem ersten, in der Hülse (2) befestigten Ende und einem zweiten, freien Ende (3a) als Teil eines Strömungsweges,
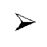 mindestens ein Ventil, mittels dessen der Strömungsweg, der durch das Steigrohr (3) führt, öffen- und schließbar ist,
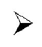 einen Verbindungsbereich (4) für die Befestigung des Ventileinsatzes (1) im Getränkefass,
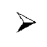 mindestens ein Abdichtungselement für die Abdichtung des Getränkefasses im Verbindungsbereich (4) nach außen,
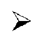 mindestens eine Messeinheit (5), die Messtechnik, Elektronik und Sensorik zur Erfassung von Druck, Temperatur, Lage und Beschleunigung und zur Ortsbestimmung sowie Mittel zur Identifikation des Ventileinsatzes, eine Kommunikationseinrichtung mit Mitteln zum Senden und Empfangen von Daten, die mit der Sensorik zur Erfassung von Druck, Temperatur, Lage und Beschleunigung und zur Ortsbestimmung kommunikativ verbunden sind, sowie Mittel zur Stromversorgung umfasst, wobei die mindestens eine Messeinheit (5) in einem Bereich, der zwischen dem einen Verbindungsbereich (4) für die Befestigung des Ventileinsatzes (1) in dem einen Getränkefass und dem freien Ende (3a) des Steigrohrs (3) liegt, platziert und zumindest teilweise am Umfang des Steigrohrs befestigt ist und in mindestens einer Hülle oder mindestens einem Gehäuse aus lebensmittelechtem Material wasserdicht eingehaust ist.

2. Ventileinsatz (1) nach Anspruch 1, **dadurch gekennzeichnet, dass** die Elemente der Stromversorgung ein oder mehrere Elemente zur batterielosen und nicht kabelgebundenen Stromversorgung umfassen.

3. Ventileinsatz (1) nach Anspruch 1 oder 2, **dadurch gekennzeichnet, dass** die mindestens eine Messeinheit (5) mit ihrem Gehäuse am Umfang des Steigrohrs befestigt ist.

4. Getränkefass zur Lagerung von kohlensäurehaltigen Getränken, umfassend
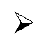 einen Fasskörper mit einer Mantelfläche und einer ersten Stirnseite und einer gegenüberliegenden zweiten Stirnseite,
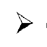 den Ventileinsatz (1) nach einem der Ansprüche 1 bis 3, der als austauschbares Verschleißteil in den Fasskörper eingesetzt und mit seinem Verbindungsbereich (4) an der ersten Stirnseite, der zweiten Stirnseite oder der Mantelfläche des Fasskörpers befestigt ist, wobei das freie Ende (3a) des Steigrohrs (3) in das Innere des Fasskörpers weist und die mindestens eine am Ventileinsatz (1) angebrachte Messeinheit (5) mit der Messtechnik, Elektronik und Sensorik zur Erfassung von Druck, Temperatur, Lage und Beschleunigung und zur Ortsbestimmung, den Mitteln zur Identifikation des Ventileinsatzes sowie der Kommunikationseinrichtung mit den Mitteln zum Senden und Empfangen von Daten und mit den Mitteln zur Stromversorgung sich innerhalb des Fasskörpers befindet, aber in der mindestens einen Hülle oder dem mindestens einen Gehäuse aus lebensmittelechtem Material wasserdicht eingehaust ist.

5. Monitoringsystem für die Überwachung von Getränkefässern nach Anspruch 4, umfassend
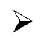 eine Vielzahl an Getränkefässern mit den Ventileinsätzen mit den angebrachten Messeinheiten mit der Messtechnik, Elektronik und Sensorik zur Erfassung von Druck, Temperatur, Lage und Beschleunigung und zur Ortsbestimmung, sowie den an den Ventileinsätzen angebrachten Mitteln zur Identifikation des Ventileinsatzes sowie an den Ventileinsätzen angebrachten Kommunikationseinrichtungen mit den Mitteln zum Senden und Empfangen von Daten, die jeweils mit der Sensorik zur Erfassung von Druck, Temperatur, Lage und Beschleunigung und zur Ortsbestimmung kommunikativ verbunden sind,
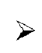 mindestens eine Empfangsstation mit mindestens einem Empfänger für die über eine drahtlose Kommunikationsverbindung gesendeten Temperaturwerte, Druckwerte, Lage- und Beschleunigungswerte, Ortsanzeigen sowie für die Identifikationsdaten,
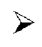 mindestens eine Sendestation mit mindestens einer Sendeeinheit für eine drahtlose Übertragung von Daten an die Kommunikationseinrichtungen der Messeinheiten der Ventileinsätze, 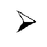 mindestens eine Recheneinrichtung zur Speicherung und
gegebenenfalls zur Auswertung der Daten, die mit dem mindestens einen Empfänger der Empfangsstation kommunikativ verbunden ist, und
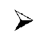 mindestens eine Steuerungseinrichtung für die Steuerung der
Überwachungszyklen, die mit der mindestens einen Recheneinrichtung und der mindestens einen Sendeeinheit der mindestens einen Sendestation kommunikativ verbunden ist.

6. Monitoringsystem nach Anspruch 5, **dadurch gekennzeichnet, dass** die mindestens eine Sendestation und die mindestens eine Empfangsstation kombiniert ausgebildet sind, indem sie zusammen mindestens einen Transceiver umfassen, der die Funktion mindestens einer Sendeeinheit der Sendestation und mindestens eines Empfängers der Empfangsstation erfüllt.

7. Monitoringsystem nach Anspruch 5 oder 6, **dadurch gekennzeichnet, dass** zur Übermittlung der Daten zwischen den Messeinheiten und mindestens einem Empfänger der Empfangsstation und/oder mindestens einer Sendeeinheit der Sendestation eine Niedrigenergieweitverkehrnetzwerk-Funktechnologie (LPWAN) eingesetzt ist.

8. Verfahren zur Überwachung von Getränkefässern für kohlensäurehaltige Getränke zwecks Qualitätsüberwachung, prädiktiver Wartung sowie der Warenstromsteuerung unter Verwendung eines Monitoringsystems nach einem der Ansprüche 5 bis 7, umfassend die folgenden Verfahrensschritte:
A) Erfassung der Temperatur und Druckwerte und der seit der Abfüllung vergangenen Zeit für eine Anzahl n der geschlossenen Getränkefässer,
B) Erstellung und Speicherung von n Datensätzen über den Druckund Temperaturverlauf für jedes der n erfassten Getränkefässer,
C) Ermittlung des Pearson'sche Korrelationskoeffizienten von Temperatur und Druck für jeden der n Datensätze, und/oder Ermittlung der Löslichkeitskonstanten aus den Druckwerten der Datensätze für jedes Getränkefass.
D) Detektion von Getränkefässern mit abnormalem Verhalten durch Vergleich innerhalb der Menge der ermittelten Pearson'schen Korrelationskoeffizienten und/oder der ermittelten Löslichkeitskonstanten, wobei das normale Verhalten aus der gesamten Menge der Getränkefässer geschätzt wird, und/oder durch Feststellung des Überschreitens eines zuvor festgelegten Schwellwertes für die Löslichkeitskonstante über einen zuvor festgelegten Zeitraum hinaus.

9. Verfahren nach Anspruch 8, **dadurch gekennzeichnet, dass** die durch die Sensorik erfassten Daten von Druck, Temperatur und Ort als Datenpaket (Uplink) an den Nutzer des Monitoringsystems zunächst in einem festgelegten Intervall übermittelt werden, solange keine Druckwerte außerhalb eines Toleranzbereiches festgestellt werden.

10. Verfahren nach Anspruch 8 oder 9, **dadurch gekennzeichnet, dass** die durch die Sensorik erfassten Daten von Druck, Temperatur und Ort als Datenpaket (Uplink) an den Nutzer des Monitoringsystems zunächst in einem von der Sensorik für die Erfassung der Beschleunigung, vorzugsweise durch einen Gyroskopsensor, gesteuerten Intervall erfolgt, so dass die Daten übermittelt werden, wenn das Fass bewegt wird.

11. Verfahren nach Anspruch 10, **dadurch gekennzeichnet, dass** auch Daten übermittelt werden, wenn die Sensorik zur Erfassung der Lage und Beschleunigung eine Bewegung detektiert hat und wieder zur Ruhe gekommen ist.

12. Verfahren nach Anspruch 11, **dadurch gekennzeichnet, dass** nach einem festgelegten Zeitraum nach der letzten Bewegung des Getränkefasses ein Datenpaket (Uplink) an den Nutzer des Monitoringsystems gesendet wird.

13. Verfahren nach einem der Ansprüche 8 bis 12, **dadurch gekennzeichnet, dass** täglich eine festgelegte Zahl an Zustandsmessungen über den Ort und aktuelle Daten zu Druck und Temperatur, gegebenenfalls über den Batteriestand, übermittelt wird.

14. Verfahren nach einem der Ansprüche 8 bis 13, **dadurch gekennzeichnet, dass** über ein Datenpaket (Downlink), das drahtlos an das Getränkefass gesendet wird, zur Sensorik und/oder zur Kommunikationseinrichtung gehörige Software in einem Getränkefass bei Bedarf konfiguriert und aktualisiert wird/werden.

15. Verfahren nach einem der Ansprüche 8 bis 14, **dadurch gekennzeichnet, dass** die gewonnenen Daten der Druck- und Temperaturmessung sowie der Ortsbestimmung der Getränkefässer mittels Verfahren des maschinellen Lernens zusammengeführt und ausgewertet werden.
